# EUROPÄISCHE PATENTSCHRIFT

(11) **EP 4 296 205 B1**
(45) Veröffentlichungstag und Bekanntmachung des Hinweises auf die Patenterteilung: **26.02.2025**
(21) Anmeldenummer: 22180290.3
(22) Anmeldetag: 22.06.2022
(51) Int. Cl.: B65G 57/30

(54) **BLOCKLAGERANORDNUNG UND VERFAHREN ZUM BETREIBEN EINER BLOCKLAGERANORDNUNG**
BLOCK BEARING ASSEMBLY AND METHOD FOR OPERATING SAME
SYSTÈME D'ENTREPOSAGE EN BLOC ET PROCÉDÉ PERMETTANT DE FAIRE FONCTIONNER UN SYSTÈME D'ENTREPOSAGE EN BLOC

(43) Veröffentlichungstag der Anmeldung: 27.12.2023
(73) Patentinhaber: Jungheinrich Aktiengesellschaft, 22047 Hamburg (DE)
(72) Erfinder: Rollwa, Volker, 66953 Pirmasens (DE)
(74) Vertreter: Keil & Schaafhausen Patentanwälte PartGmbB

(56) Entgegenhaltungen:
- EP-A1- 3 782 931
- CN-A- 111 153 220
- JP-A- S59 183 875
- KR-B1- 102 280 791
- US-A- 4 764 074

## Beschreibung

Die vorliegende Erfindung betrifft eine Blocklageranordnung mit mindestens einem Blocklagerelementaufnahmeraum und einem unterhalb des Blocklagerelementaufnahmeraums angeordneten Beschickungsraum, wobei zwischen dem Blocklagerelementaufnahmeraum und dem Beschickungsraum eine Öffnung mit einer Halteeinrichtung angeordnet ist und eine Richtung vom Beschickungsraum in den Blocklagerelementaufnahmeraum eine Einlagerrichtung bildet.

Weiterhin betrifft die vorliegende Erfindung ein Verfahren zum Betreiben einer Blocklageranordnung mit mindestens einem Blocklagerelementaufnahmeraum und einem in Schwerkraftrichtung unterhalb des Blocklagerelementaufnahmeraums angeordneten Beschickungsraum, bei dem man ein Blocklagerelement vom Beschickungsraum durch eine Öffnung in den Blocklagerelementaufnahmeraum bewegt.

Eine derartige Blocklageranordnung und ein derartiges Verfahren sind aus EP 3 782 931 A1 bekannt.

CN 111153220 A zeigt einen Mechanismus zum Stapeln von Verpackungskisten, bei der Verpackungskisten von einer Zuführbahn auf eine Fördereinheit zugeführt werden können. Oberhalb der Fördereinheit ist eine Hebeeinrichtung vorgesehen, mit der Kisten, die auf der Transportrichtung stehen, angehoben werden können. Die Hebeeinrichtung greift immer an der untersten Kiste an und kann somit diese Kiste und gegebenenfalls einen darauf befindlichen Stapel von weiteren Kisten so weit anheben, dass eine neue Kiste unter diesen Stapel verfahren werden kann.

KR 10-2280791 B1 zeigt eine Blocklageranordnung, bei der ein Behälter beim Einlagern von einer ersten Gabelanordnung erfasst und angehoben wird, wobei die Gabel am unteren Ende des Behälters angreift. Die Gabel hebt den Behälter so weit an, dass eine in Schwerkraftrichtung weiter oben angeordnete Gabel den Behälter an einer anderen Stelle ergreift und festhalten kann. Im Blocklagerelementaufnahmeraum ist eine Zentriereinrichtung angeordnet, die in vertikaler Richtung über die Länge des Blocklagerelementaufnahmeraums durchgeht und nicht bewegbar ist.

US 4 764 074 A beschreibt eine Anlage gemäß dem Oberbegriff des Anspruchs 1 und ein Palettenladegerät, bei dem seitlich und vertikal verschiebbare Rammwände vorgesehen sind.

JP S59 183875 A beschreibt ein Container-Sortierverfahren und eine Sortieranlage.

Eine Blocklageranordnung kann verwendet werden, um in einem vorbestimmten Raum eine möglichst große Anzahl von Blocklagerelementen unterbringen zu können. Die Blocklagerelemente, beispielsweise Behälter oder Pflanzenträger, werden hierbei in dem Blocklagerelementaufnahmeraum in Form eines Stapels angeordnet. Damit stehen die Blocklagerelemente in Schwerkraftrichtung dicht an dicht aufeinander, so dass in Schwerkraftrichtung kein Platz verlorengeht. Mehrere Blocklagerelementaufnahmeräume können quer zur Schwerkraftrichtung ebenfalls dicht benachbart angeordnet werden, weil zwischen den einzelnen Blocklagerelementaufnahmeräumen kein Handhabungsraum erforderlich ist. Die Blocklagerelemente werden vielmehr von unten durch den Beschickungsraum in einen der Blocklagerelementaufnahmeräume eingelagert und auch nach unten aus dem Blocklagerelementaufnahmeraum entnommen.

Eine Blocklageranordnung kann als Lager verwendet werden, in dem eine große Anzahl von Produkten gelagert wird, bei dem die Blocklagerelemente als Behälter ausgebildet sind. Jeder Behälter kann dann ein oder mehrere Produkte aufnehmen, die gelagert werden sollen. Die Blocklageranordnung kann aber auch als Gewächshausanordnung ausgebildet sein. In diesem Fall sind die Blocklagerelemente als Pflanzenträger ausgebildet, die, falls erforderlich, nicht nur in Schwerkraftrichtung nach oben offen sind, sondern auch an den Seiten quer zur Schwerkraftrichtung Öffnungen aufweisen.

Eine Blocklageranordnung kann eine beträchtliche Höhe aufweisen, so dass ein Stapel aus Blocklagerelementen ebenfalls eine entsprechend große Höhe aufweisen kann. Ein Stapel aus Blocklagerelementen mit einer Höhe von mehr als 10 m ist durchaus realistisch.

Die Blocklagerelemente sind, unabhängig davon, ob es sich um Behälter oder um Pflanzenträger handelt, mit einer gewissen Toleranz behaftet. Dies kann dazu führen, dass sich ein Stapel aus Blocklagerelementen im Blocklageraufnahmeraum neigt, wodurch hohe seitliche Kräfte auf ein Gestell wirken können, in dem der Blocklagerelementaufnahmeraum ausgebildet ist. Wenn es sich bei den Blocklagerelementen um Pflanzenträger handelt, hat die Neigung zusätzlich den negativen Effekt, dass bei einer Bewässerung von Pflanzen, die in dem Pflanzenträger aufgenommen sind, nicht alle Pflanzen gleichmäßig mit Wasser oder einer anderen Nährflüssigkeit versorgt werden.

Der Erfindung liegt die Aufgabe zugrunde, eine Blocklageranordnung zuverlässig betreiben zu können.

Diese Aufgabe wird bei einer Blocklageranordnung der eingangs genannten Art dadurch gelöst, dass im Blocklagerelementaufnahmeraum eine Zentriereinrichtung angeordnet ist, die in Einlagerrichtung im Blocklagerelementaufnahmeraum bewegbar ist.

Der Querschnitt des Blocklagerelementaufnahmeraums muss etwas größer sein als der Querschnitt der Blocklagerelemente, damit sich die Blocklagerelemente im Blocklagerelementaufnahmeraum in Einlagerrichtung bewegen können. Diese Bedingung ergibt sich daraus, dass die Elemente, die den Blocklagerelementaufnahmeraum definieren, beispielsweise Ständer, ebenfalls mit einer gewissen Toleranz behaftet sind, die zu den Toleranzen der Blocklagerelemente addiert werden müssen. Die Zentriereinrichtung kann jedoch wesentlich besser an den Querschnitt des Blocklagerelementaufnahmeraums angepasst sein und ein Blocklagerelement, das von unten an die Zentriereinrichtung angesetzt wird, in einem Bereich halten, in dem die Gefahr des Kippens eines Stapels aus Blocklagerelementen geringer ist. Wenn nun der Stapel von unten nach oben wächst, wird die Zentriereinrichtung mit angehoben und hält immer das oberste Blocklagerelement in dem vorgegebenen Bereich. Da die Blocklagerelemente in dem Stapel miteinander in Eingriff stehen, werden damit automatisch auch die jeweils in Schwerkraftrichtung unterhalb der Zentriereinrichtung angeordneten Blocklagerelemente in dem gewünschten Bereich gehalten, so dass eine Neigung des Stapels aus Blocklagerelementen zwar nicht ausgeschlossen wird. Der Winkel, unter dem sich der Stapel neigen kann, wird doch ganz erheblich vermindert, so dass bei der dann nur kleinen Neigung des Stapels aus Blocklagerelementen keine Gefahr mehr für die Elemente besteht, die den Blocklagerelementaufnahmeraum bilden. Eine leichte Neigung ist auch bei einem Pflanzenträger zugelassen, wobei die Neigung dann so gering ist, dass alle im Pflanzenträger aufgenommenen Pflanzen gleichmäßig gewässert werden.

Vorzugsweise sind am Rand des Blocklagerelementaufnahmeraums mehrere sich in Einlagerrichtung erstreckende Flächen angeordnet und die Zentriereinrichtung wirkt mit den Flächen zusammen. Die Zentriereinrichtung kann sich dann an den Flächen abstützen und verhindert somit, dass sich die Zentriereinrichtung quer zur Schwerkraftrichtung in dem Blocklagerelementaufnahmeraum bewegt.

Hierbei ist bevorzugt, dass die Flächen an Ständern angeordnet sind, die sich in Einlagerrichtung erstrecken. Eine Blocklageranordnung weist vielfach Ständer auf, zwischen denen die Blocklagerelementaufnahmeräume angeordnet sind. Man kann diese Ständer dann gleichzeitig zum Abstützen der Zentriereinrichtung verwenden.

Vorzugsweise sind mindestens einige Ständer quer zur Einlagerrichtung miteinander verbunden. Damit stabilisieren sich die Ständer gegenseitig.

Vorzugsweise sind die Ständer an Ecken der Öffnung angeordnet. Damit befinden sich die Ständer automatisch auch an Ecken des Blocklagerelementaufnahmeraums und die Zentriereinrichtung kann sich an den Ecken des Blocklagerelementaufnahmeraums abstützen.

Die Zentriereinrichtung weist eine Basis mit einer an die Form der Öffnung angepassten Umfangskontur auf, wobei in Schwerkraftrichtung oberhalb der Basis mindestens ein über die Umfangskontur überstehendes Zentrierelement angeordnet ist. Wenn noch kein Blocklagerelement in dem Blocklagerelementaufnahmeraum angeordnet ist, dann befindet sich die Basis der Zentriereinrichtung in der Öffnung und wird dort von der Halteeinrichtung gehalten. Die Basis ist dann durch die Öffnung sehr genau positioniert. Oberhalb der Öffnung weist der Blocklagerelementaufnahmeraum jedoch eine größere Querschnittsfläche auf, um den Toleranzen Rechnung zu tragen, mit denen die die Blocklageranordnung bildenden Elemente und auch die Blocklagerelemente behaftet sind. Da das Zentrierelement über die Umfangskontur übersteht, also quer zur Schwerkraftrichtung über die

Umfangskontur der Basis hinausragt, kann man mit Hilfe des Zentrierelements die Zentriereinrichtung auch dann in ihrer Position halten, wenn die Zentriereinrichtung durch ein Blocklagerelement aus der Öffnung herausgeschoben worden ist.

Vorzugsweise ist das Zentrierelement mit einer Vorspanneinrichtung verbunden, die das Zentrierelement mit einer Kraftkomponente quer zur Einlagerrichtung nach außen beaufschlagt. In diesem Fall ist es möglich, die Zentriereinrichtung von unten durch die Öffnung in den Blocklagerelementaufnahmeraum einzusetzen. Das Zentrierelement kann bei diesem Vorgang gegen die Kraft der Vorspanneinrichtung einwärts bewegt werden, so dass die Zentriereinrichtung durch die Öffnung passt. Sobald die Zentriereinrichtung in die Öffnung hineinbewegt worden ist und das Zentrierelement in Schwerkraftrichtung nach oben aus der Öffnung herausragt, kann es durch die Vorspanneinrichtung nach außen bewegt werden und dann zur Abstützung der Zentriereinrichtung im Blocklagerelementaufnahmeraum mit den Flächen zusammenwirken.

Hierbei ist bevorzugt, dass das Zentrierelement mit einer Verriegelungseinrichtung zusammenwirkt. Man ist dann nicht mehr darauf angewiesen, dass die Kraft der Vorspanneinrichtung ausreicht, um den Stapel aus Blocklagerelementen in der mittigen Position zu halten. Die Vorspanneinrichtung dient dann nur noch dazu, das Zentrierelement weit genug nach außen zu bewegen. In dieser Position wird es dann durch die Verriegelungseinrichtung verriegelt.

Hierbei ist bevorzugt, dass die Verriegelungseinrichtung mit einer Betätigungseinrichtung zusammenwirkt, die in Schwerkraftrichtung von unten aktivierbar ist. Damit ist es möglich, die Verriegelungseinrichtung zu aktivieren, indem ein Blocklagerelement von unten durch die Öffnung in den Blocklagerelementaufnahmeraum eingebracht wird. In diesem Fall wirkt das Blocklagerelement auf die Zentriereinrichtung und schiebt diese nicht nur in Einlagerrichtung nach oben, sondern es wirkt auch über die Betätigungseinrichtung auf die Verriegelungseinrichtung und verriegelt dann das Zentrierelement in einer Zentrierposition.

Hierbei ist bevorzugt, dass die Betätigungseinrichtung in Schwerkraftrichtung nach unten von der Basis vorsteht. In diesem Fall kann die Betätigungseinrichtung durch ein Blocklagerelement, das in die Öffnung von unten eingesetzt wird, an der Betätigungseinrichtung zur Anlage kommen und bewegt diese dann in Schwerkraftrichtung nach oben, wenn das Blocklagerelement angehoben wird. Damit ist beim Einlagern des ersten Blocklagerelements in den Blocklagerelementaufnahmeraum automatisch sichergestellt, dass sich die Zentriereinrichtung in der gewünschten mittigen Position befindet.

Hierbei ist bevorzugt, dass das Zentrierelement eine Rolle aufweist. Damit ergeben sich beim Bewegen der Blocklagerelemente in der Einlagerrichtung keine größeren Reibungsverluste, die durch die Zentriereinrichtung hervorgerufen werden. Vielmehr kann die Rolle mit relativ kleinem Widerstand rollen, ohne einer Bewegung der Blocklagerelemente nennenswerten Widerstand entgegenzusetzen.

Hierbei ist bevorzugt, dass die Rolle eine Lauffläche aufweist, die aus einem elastomeren Material ausgebildet ist. Das elastomere Material ist in der Lage, kleinere Unebenheiten auf einer Fläche auszugleichen, über die die Rolle abrollt. Damit wird ein Blockieren der Zentriereinrichtung bei einer Bewegung vermieden.

Vorzugsweise ist in Schwerkraftrichtung unterhalb der Zentriereinrichtung ein Blocklagerelement angeordnet, das mit der Zentriereinrichtung formschlüssig in Eingriff steht. Der Eingriff durch Formschluss bewirkt, dass sich das Blocklagerelement nicht quer zur Einlagerrichtung gegenüber der Zentriereinrichtung bewegen kann, so dass durch den formschlüssigen Eingriff automatisch eine korrekte Positionierung des Blocklagerelements gegenüber der Zentriereinrichtung gewährleistet ist. Ein derartiger formschlüssiger Eingriff lässt sich beim Einsetzen des Blocklagerelements in die Öffnung relativ leicht erzeugen, weil die Zentriereinrichtung in der Öffnung relativ genau ausgerichtet ist und das Blocklagerelement beim Einführen in die Öffnung mit der gleichen Genauigkeit positioniert wird. Diese übereinstimmenden Genauigkeiten reichen aus, um einen Formschluss zwischen dem Blocklagerelement und der Zentriereinrichtung zu erreichen.

Die Aufgabe wird bei einem Verfahren der eingangs genannten Art dadurch gelöst, dass man das Blocklagerelement mit einer im Blocklagerelementaufnahmeraum angeordneten Zentriereinrichtung in Eingriff bringt und die Zentriereinrichtung beim Anheben des Blocklagerelements im Blocklagerelementaufnahmeraum mit anhebt.

Wie oben bereits erläutert, kann man die Zentriereinrichtung mit relativ geringem Aufwand in einer mittigen (oder einer anderen gewünschten) Position im Blocklagerelementaufnahmeraum halten. Wenn dann ein Blocklagerelement in den Blocklagerelementaufnahmeraum eingesetzt wird und mit der Zentriereinrichtung in Eingriff steht, ist automatisch sichergestellt, dass sich das Blocklagerelement ebenfalls in der gewünschten Position befindet und sich nicht quer zur Einlagerrichtung bewegen kann. Jedes nachfolgende Blocklagerelement, das von unten in einen bereits im Blocklagerelementaufnahmeraum befindlichen Stapel aus Blocklagerelementen angesetzt wird, wird dann durch das jeweils darüber befindliche Blocklagerelement in dem gewünschten Bereich gehalten, so dass man eine Neigung des Stapels aus Blocklagerelementen, die über ein vorbestimmtes Maß hinausgeht, mit großer Zuverlässigkeit verhindern kann.

Hierbei ist bevorzugt, dass man mindestens ein Zentrierelement der Zentriereinrichtung beim Ansetzen des Blocklagerelements an die Zentriereinrichtung in einer nach außen über eine Basis der Zentriereinrichtung vorstehenden Position verriegelt. Solange kein Blocklagerelement in den Blocklagerelementaufnahmeraum eingesetzt wird, ist die Zentriereinrichtung nur durch ihre Position in der Öffnung zwischen dem Beschickungsraum und dem Blocklagerelementaufnahmeraum gehalten. Erst dann, wenn die Zentriereinrichtung durch ein von unten angesetztes Blocklagerelement aus dieser Position herausbewegt wird, tritt das Zentrierelement in Aktion und stellt dann die gewünschte Position der Zentriereinrichtung im Blocklagerelementaufnahmeraum sicher.

Die Erfindung wird im Folgenden anhand von bevorzugten Ausführungsbeispielen in Verbindung mit der Zeichnung beschrieben. Hierin zeigen:
- Fig. 1: einen Blocklagerelementaufnahmeraum mit einem Stapel aus Blocklagerelementen,
- Fig. 2: eine Draufsicht auf den Blocklagerelementaufnahmeraum,
- Fig. 3: ein Detail der Draufsicht,
- Fig. 4: eine abgewandelte Form des Details nach Fig. 3,
- Fig. 5: ein Blocklagerelement kurz vor dem Einsetzen in einen Blocklagerelementaufnahmeraum,
- Fig. 6: einen ersten Schritt beim Einsetzen eines Blocklagerelements in den Blocklagerelementaufnahmeraum,
- Fig. 7: einen zweiten Schritt beim Einsetzen eines Blocklagerelements in den Blocklagerelementaufnahmeraum und
- Fig. 8: den Abschluss des Einsetzens des Blocklagerelements in den Blocklagerelementaufnahmeraum.

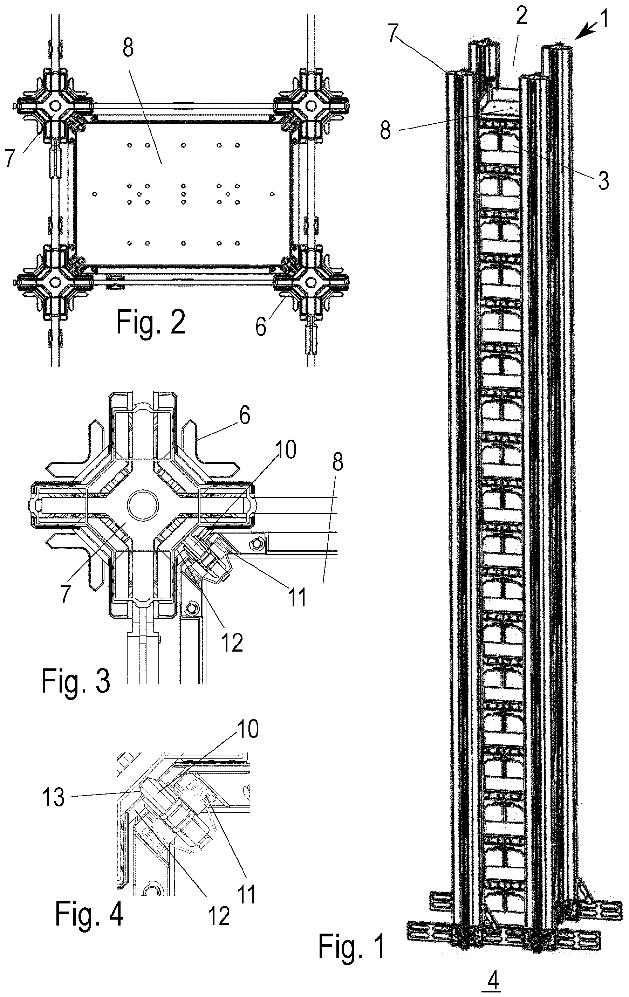

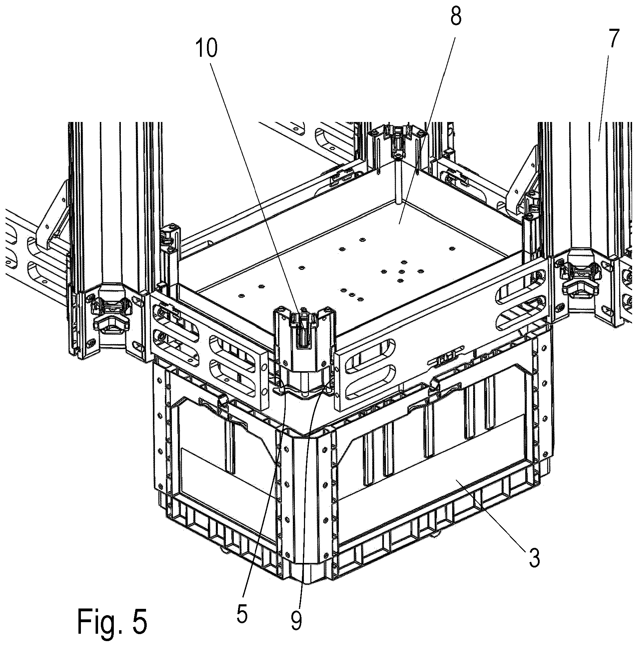

Fig. 1 zeigt stark schematisiert einen Teil einer Blocklageranordnung 1 mit einem Blocklagerelementaufnahmeraum 2, in dem mehrere Blocklagerelemente 3 in Form eines Stapels angeordnet sind. Unterhalb des Blocklagerelementaufnahmeraums 2 ist ein Beschickungsraum 4 angeordnet. Zwischen dem Blocklagerelementaufnahmeraum 2 und dem Beschickungsraum 4 ist eine Öffnung 5 (Fig. 5) angeordnet. In der Öffnung ist eine Halteeinrichtung 6 angeordnet (Fig. 3), mit der ein Blocklagerelement 3 in dem Behälteraufnahmeraum 2 festgehalten werden kann und zwar so, dass unterhalb des Behälteraufnahmeraums 2 noch genügend Platz vorhanden ist, um ein weiteres Blocklagerelement 3 gemeinsam mit einem Beschickungsfahrzeug (nicht dargestellt) dort zu positionieren und das weitere Blocklagerelement 3 in den Blocklagerelementaufnahmeraum 2 einzubringen. Die Halteeinrichtung 6 ist im vorliegenden Fall durch Halteklinken gebildet, die an den Ecken der Öffnung 5 angeordnet sind. Die Halteklinken können aus der in Fig. 3 dargestellten Halteposition, in der sie ein Blocklagerelement 3 halten, in eine Freigabeposition verschwenkt werden, so dass ein Blocklagerelement 3 an der Halteeinrichtung 6 vorbei nach unten in den Beschickungsraum bewegt werden kann.

Wie man in Fig. 1 erkennen kann, kann der Stapel aus Blocklagerelementen 3 eine beträchtliche Höhe aufweisen. Diese Höhe kann durchaus 10 m oder mehr betragen. Da die Blocklagerelemente 3 mit einer gewissen Toleranz behaftet sind, besteht das Risiko, dass sich der Stapel aus Blocklagerelementen 3 im Blocklagerelementaufnahmeraum 2 neigt. Dies kann dann dazu führen, dass der Stapel aus Blocklagerelementen 3 gegen Ständer 7 drückt, die an Ecken des Blocklagerelementaufnahmeraums 2 angeordnet sind. Dies möchte man vermeiden.

Wenn die Blocklagerelemente 3 als Behälter ausgebildet sind, möchte man eine unzulässig hohe seitliche Kraft auf die Ständer 7 vermeiden. Wenn die Blocklagerelemente 3 als Pflanzenträger ausgebildet sind, möchte man eine Neigung des Stapels auch vermeiden, um sicherzustellen, dass alle in dem Pflanzenträger aufgenommen Pflanzen gleichmäßig bewässert werden können. Dies wäre bei einer Neigung des Stapels aus Blocklagerelementen 3 nicht mehr gewährleistet.

Um eine Neigung des Stapels aus Blocklagerelementen 3 im Behälteraufnahmeraum 2 auf ein zulässiges Maß zu begrenzen, ist im Behälteraufnahmeraum 2 eine Zentriereinrichtung 8 angeordnet, die im Blocklagerelementaufnahmeraum 2 bewegbar ist, und zwar in die Richtung, in der auch die Blocklagerelemente 3 im Behälteraufnahmeraum 2 bewegt werden können. Diese Richtung wird auch als "Einlagerrichtung" bezeichnet. Die Einlagerrichtung entspricht der Schwerkraftrichtung.

Die Zentriereinrichtung weist, wie man in Fig. 5 erkennen kann, eine Basis 9 auf, die auch als Rahmen bezeichnet werden kann. Die Basis 9 weist eine Außenkontur auf, die an die Innenkontur der Öffnung 5 angepasst ist. Solange sich noch kein Blocklagerelement 3 im Blocklagerelementaufnahmeraum 2 befindet, ruht die Zentriereinrichtung 9 auf der Halteeinrichtung 6 und ist damit in der Öffnung 5 positioniert. Diese Positionierung kann mit einer relativ großen Genauigkeit erfolgen. Wenn ein Blocklagerelement 3 von unten in die Öffnung hineinbewegt wird, dann wird auch dieses Blocklagerelement 3 gegenüber der Öffnung mit der gleichen Genauigkeit positioniert und kommt dann mit der Zentriereinrichtung 8 in einen formschlüssigen Eingriff. Die Position des Blocklagerelements 3 quer zur Einlagerrichtung entspricht dann der Position der Zentriereinrichtung 8 quer zur Einlagerrichtung.

Oberhalb der Öffnung 5 weist der Behälteraufnahmeraum 2 einen größeren Querschnitt auf als der Querschnitt der Öffnung 5. Dieser Querschnitt wird durch die Ständer 7 bestimmt, die an den Ecken der Öffnung 5 und damit an den Ecken des Behälteraufnahmeraums 2 angeordnet sind. Diese Ständer 7 haben eine Länge, die mindestens der Höhe des Stapels aus Blocklagerelementen 3 entspricht. Auch die Ständer 7 sind mit einer gewissen Toleranz behaftet, so dass man einen gewissen Abstand zwischen den Ecken der Blocklagerelemente 3 und den Ständern 7 einhalten muss, um ein störungsfreies Bewegen der Blocklagerelemente 3 in Einlagerrichtung sicherstellen zu können.

Die Zentriereinrichtung 8 weist in Schwerkraftrichtung oberhalb der Basis 9 mindestens ein Zentrierelement 10 auf, das im vorliegenden Fall als Rolle ausgebildet ist. Das Zentrierelement 10 wird durch eine Vorspanneinrichtung 11, die im vorliegenden Fall als Feder ausgebildet ist, quer zur Einlagerrichtung über die Kontur der Basis 9 herausbewegt, und zwar dergestalt, dass es sich an eine Fläche 12 anlegen kann, die an dem Ständer 7 angeordnet ist. Das Zentrierelement 10 stützt sich damit an dem Ständer 7 ab. Bei einer alternativen Ausgestaltung, die in Fig. 4 dargestellt ist, kann die Fläche 12 auch noch eine Nut 13 aufweisen, in die das Zentrierelement 10 eingreift. Die Nut 13 kann beispielsweise V-förmig oder trapezförmig ausgebildet sein.

Die Fläche 12 erstreckt sich über die gesamte Höhe des Blocklagerelementaufnahmeraums 2, so dass die Zentriereinrichtung 8 auch über die gesamte Höhe des Blocklagerelementaufnahmeraums 2 bewegt werden kann und sich das Zentrierelement 10 über die gesamte Bewegung an der Fläche 12 abstützen kann.

Im vorliegenden Fall weist die Zentriereinrichtung 8 an jeder Ecke ein Zentrierelement 10 auf, wobei an jeder Ecke ein Ständer 7 mit einer Fläche 12 angeordnet ist.

Die Ausgestaltung mit dem Zentrierelement 10, das durch die Vorspanneinrichtung 11 nach außen gedrückt wird, hat den Vorteil, dass die Zentriereinrichtung 8 durch die Öffnung 5 in den Blocklagerelementaufnahmeraum 2 eingesetzt werden kann. Bei diesem Einsetzen können die Zentrierelemente 10 quer zur Einlagerrichtung nach innen bewegt werden und werden erst nach dem Durchtritt durch die Öffnung 5 wieder nach außen bewegt.

Das Zentrierelement 10 ist an einem Hebel 14 verschwenkbar gelagert. Solange sich die Zentriereinrichtung 8 noch innerhalb der Öffnung 5 befindet, ist das Zentrierelement 10 mit seinem Hebel 14 quer zur Einlagerrichtung nach innen geschwenkt.

Die Zentriereinrichtung 8 weist einen Stift 15 auf, der mit dem Hebel 14 eine Verriegelungseinrichtung bildet. Der Stift 15 ist mit einer Betätigungseinrichtung 16 verbunden, die in Schwerkraftrichtung nach unten von der Basis 9 vorsteht. Die Betätigungseinrichtung 16 kann eine Federanordnung 17 aufweisen, die die Betätigungseinrichtung 16 in Schwerkraftrichtung nach unten vorspannt.

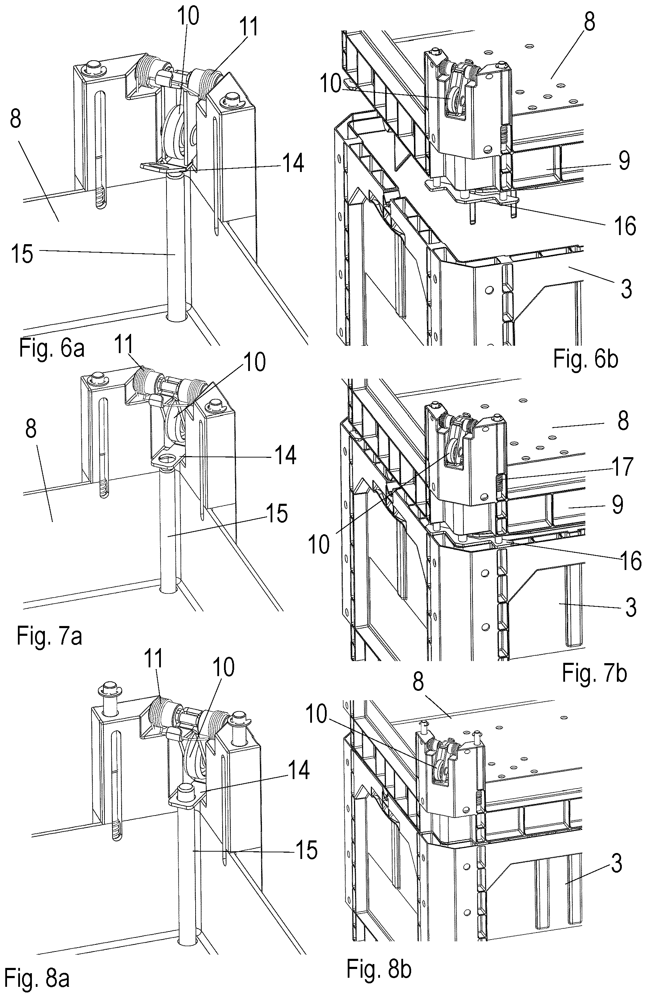

Wenn nun ein Blocklagerelement 3 von unten in die Öffnung 5 eingesetzt wird, dann kommt das Blocklagerelement 3 von unten mit der Zentriereinrichtung 8 in Kontakt und bewegt die Zentriereinrichtung 8 in Einlagerrichtung nach oben. Hierbei kommt das Zentrierelement 10 von der Innenkontur der Öffnung 5 frei (oder es ist bereits freigekommen, wenn das Zentrierelement vollständig durch die Öffnung 5 hindurchbewegt worden ist) und schwenkt nach außen, um sich an die Fläche 12 am Ständer 7 anzulegen. Bei einer weiteren Bewegung wird der Stift 15 durch die Betätigungseinrichtung 16 nach oben geschoben und verriegelt, wie dies in Fig. 8 zu erkennen ist, den Hebel 14, so dass das Zentrierelement 10 in seiner ausgerückten Stellung festgelegt ist.

Im vorliegenden Ausführungsbeispiel ist dargestellt, dass der Hebel 14 eine Öffnung aufweist, in die der Stift 15 eintritt. Es reicht aber prinzipiell aus, wenn der Stift 15 eine Schwenkbewegung des Hebels 14 quer zur Einlagerrichtung nach innen verhindern kann. Dies ist prinzipiell auch dann der Fall, wenn der Hebel 14 von außen am Stift 15 anliegt.

Wenn, wie in Fig. 8 dargestellt, das Zentrierelement in seiner nach außen bewegten Position festgelegt ist und auch die an den anderen Ecken befindlichen Zentrierelemente 10 in ihrer nach außen geschwenkten Position festgelegt sind, dann liegen im Idealfall alle Zentrierelemente 10 an den Flächen 12 an den Ständern 7 an. Dies ist allerdings nicht unbedingt erforderlich. Man kann durchaus ein kleines Spiel in der Größenordnung von 1 bis 5 mm zwischen den Zentrierelemente 10 und den Flächen 12 zulassen, so dass sich ein Stapel aus Blocklagerelementen 3 nur noch im Rahmen dieses Spiels neigen kann. Diese Neigung ist wesentlich kleiner als eine Neigung, die sich ergeben würde, wenn sich der Stapel aus Blocklagerelementen 3 ohne Zentriereinrichtung 8 bis zur Anlage an einen Ständer 7 neigen könnte. Die Zentriereinrichtung 8 wird also verwendet, um die Neigung des Stapels aus Blocklagerelementen 3 in einem zulässigen vorbestimmten Bereich zu halten.

Wie beschrieben, wird beim Einsetzen des ersten Blocklagerelements 3 in den Behälteraufnahmeraum 2 eine formschlüssige Verbindung zwischen dem Blocklagerelement 3 und der Zentriereinrichtung 8 hergestellt, so dass die Zentriereinrichtung das unmittelbar unter ihr befindliche Blocklagerelement 3 in einer gewünschten Position hält. Wenn ein weiteres Blocklagerelement 3 in den Blocklagerelementaufnahmeraum 2 eingesetzt wird, dann kommt das weitere Blocklagerelement 3 in formschlüssigen Eingriff mit dem bereits im Blocklagerelementaufnahmeraum 2 befindlichen Blocklagerelement und wird dann durch das unmittelbar über ihm befindliche Blocklagerelement 3 in der gewünschten Position gehalten. Das Gleiche gilt für die nachfolgenden Blocklagerelemente. Der Stapel aus Blocklagerelementen 3 wird also an seinem in Schwerkraftrichtung oberen Ende durch die Zentriereinrichtung 8 positioniert und in seinem in Schwerkraftrichtung unteren Ende durch die Öffnung 5. Damit lässt sich eine Ausrichtung des Stapels aus Blocklagerelementen 3 sicherstellen, bei der eine maximal zulässige Neigung nicht überschritten wird.

In nicht näher dargestellter Weise können die Ständer 7 quer zur Einlagerrichtung miteinander verbunden sein, um sich gegenseitig zu stabilisieren.

Das als Rolle ausgebildete Zentrierelement 10 weist zumindest an seinem Umfang eine Schicht aus einem elastomeren Material auf, so dass die Rolle eine Lauffläche aufweist, die aus einem elastomeren Material gebildet ist. Damit kann die Rolle kleine Unebenheiten in der Fläche 12 ausgleichen und ein Blockieren der Bewegung der Zentriereinrichtung 8 vermeiden.

## Patentansprüche

1. Blocklageranordnung (1) mit mindestens einem Blocklagerelementaufnahmeraum (2) und einem unterhalb des Blocklagerelementaufnahmeraums (2) angeordneten Beschickungsraum (4), wobei zwischen dem Blocklagerelementaufnahmeraum (2) und dem Beschickungsraum (4) eine Öffnung (5) mit einer Halteeinrichtung (6) angeordnet ist und eine Richtung vom Beschickungsraum (4) in den Blocklagerelementaufnahmeraum (2) eine Einlagerrichtung bildet, wobei im Blocklagerelementaufnahmeraum (2) eine Zentriereinrichtung (8) angeordnet ist, die in Einlagerrichtung im Blocklagerelementaufnahmeraum (2) bewegbar ist, **dadurch gekennzeichnet, dass** die Zentriereinrichtung (8) eine Basis (9) mit einer an die Form der Öffnung (5) angepassten Umfangskontur aufweist, wobei in Schwerkraftrichtung oberhalb der Basis (9) mindestens ein über die Umfangskontur überstehendes Zentrierelement (10) angeordnet ist.

2. Blocklageranordnung nach Anspruch 1, **dadurch gekennzeichnet, dass** am Rand des Blocklagerelementaufnahmeraums (2) mehrere sich in Einlagerrichtung erstreckende Flächen (12) angeordnet sind und die Zentriereinrichtung (8) mit den Flächen (12) zusammenwirkt.

3. Blocklageranordnung nach Anspruch 2, **dadurch gekennzeichnet, dass** die Flächen (12) an Ständern (7) angeordnet sind, die sich in Einlagerrichtung erstrecken.

4. Blocklageranordnung nach Anspruch 3, **dadurch gekennzeichnet, dass** mindestens einige Ständer (7) quer zur Einlagerrichtung miteinander verbunden sind.

5. Blocklageranordnung nach Anspruch 3 oder 4, **dadurch gekennzeichnet, dass** die Ständer (7) an Ecken der Öffnung (5) angeordnet sind.

6. Blocklageranordnung nach Anspruch 1, **dadurch gekennzeichnet, dass** das Zentrierelement (10) mit einer Vorspanneinrichtung (11) verbunden ist, die das Zentrierelement (10) mit einer Kraftkomponente quer zur Einlagerrichtung nach außen beaufschlagt.

7. Blocklageranordnung nach Anspruch 6, **dadurch gekennzeichnet, dass** das Zentrierelement (10) mit einer Verriegelungseinrichtung (14. 15) zusammenwirkt.

8. Blocklageranordnung nach Anspruch 7, **dadurch gekennzeichnet, dass** die Verriegelungseinrichtung (14. 15) mit einer Betätigungseinrichtung (16) zusammenwirkt, die in Schwerkraftrichtung von unten aktivierbar ist.

9. Blocklageranordnung nach Anspruch 8, **dadurch gekennzeichnet, dass** die Betätigungseinrichtung (16) in Schwerkraftrichtung nach unten von der Basis (9) vor steht.

10. Blocklageranordnung nach einem der Ansprüche 1 bis 9, **dadurch gekennzeichnet, dass** das Zentrierelement (10) eine Rolle aufweist.

11. Blocklageranordnung nach Anspruch 10, **dadurch gekennzeichnet, dass** die Rolle eine Lauffläche aufweist, die auf einem elastomeren Material ausgebildet ist.

12. Blocklageranordnung nach einem der Ansprüche 1 bis 11, **dadurch gekennzeichnet, dass** in Schwerkraftrichtung unterhalb der Zentriereinrichtung (8) ein Blocklagerelement (3) angeordnet ist, das mit der Zentriereinrichtung (8) formschlüssig in Eingriff steht.

13. Verfahren zum Betreiben einer Blocklageranordnung (1) mit mindestens einem Blocklagerelementaufnahmeraum (2) und einem in Schwerkraftrichtung unterhalb des Blocklagerelementaufnahmeraums (2) angeordneten Beschickungsraum (4), bei dem man ein Blocklagerelement (3) vom Beschickungsraum (4) durch eine Öffnung (5) in den Blocklagerelementaufnahmeraum (2) bewegt, **dadurch gekennzeichnet, dass** man das Blocklagerelement (3) mit einer im Blocklagerelementaufnahmeraum (2) angeordneten Zentriereinrichtung (8) in Eingriff bringt und die Zentriereinrichtung (8) beim Anheben des Blocklagerelement (3) im Blocklagerelementaufnahmeraum (2) mit anhebt.

14. Verfahren nach Anspruch 13, **dadurch gekennzeichnet, dass** man mindestens ein Zentrierelement (10) der Zentriereinrichtung (8) beim Ansetzen des Blocklagerelements (3) an die Zentriereinrichtung (8) in einer nach außen über eine Basis (9) der Zentriereinrichtung (8) vorstehenden Position verriegelt.

## Claims

1. Block storage arrangement (1) having at least one block storage element receiving space (2) and a loading space (4) arranged beneath the block storage element receiving space (2), an opening (5) having a holding device (6) being arranged between the block storage element receiving space (2) and the loading space (4), and a direction from the loading space (4) into the block storage element receiving space (2) forms a storage direction, a centering device (8) being arranged in the block storage element receiving space (2) and being , **characterized in that** the centering device (8) has a base (9) with a peripheral contour adapted to the shape of the opening (5), at least one centering element (10) projecting beyond the peripheral contour being arranged above the base (9) in the direction of gravity.

2. Block storage arrangement according to claim 1, **characterized in that** a plurality of surfaces (12) extending in the storage direction are arranged at the edge of the block storage element receiving space (2) and the centering device (8) interacts with the surfaces (12).

3. Block storage arrangement according to claim 2, **characterized in that** the surfaces (12) are arranged on uprights (7) which extend in the storage direction.

4. Block storage arrangement according to claim 3, **characterized in that** at least some uprights (7) are connected to one another transversely with respect to the storage direction.

5. Block storage arrangement according to claim 3 or 4, **characterized in that** the uprights (7) are arranged at corners of the opening (5).

6. Block storage arrangement according to claim 1, **characterized in that** the centering element (10) is connected to a prestressing device (11) which acts upon the centering element (10) with a force component outwards and transversely with respect to the storage direction.

7. Block storage system according to claim 6, **characterized in that** the centering element (10) interacts with a locking device (14, 15).

8. Block storage arrangement according to claim 7, **characterized in that** the locking device (14, 15) interacts with an actuating device (16) which can be activated from below in the direction of gravity.

9. Block storage arrangement according to claim 8, **characterized in that** the actuating device (16) projects downwards in the direction of gravity from the base (9).

10. Block storage arrangement according to one of claims 1 to 9, **characterized in that** the centering element (10) has a roller.

11. Block storage arrangement according to claim 10, **characterized in that** the roller has a running surface which is formed on an elastomeric material.

12. Block storage arrangement according to one of claims 1 to 11, **characterized in that** a block storage element (3) is arranged below the centering device (8) in the direction of gravity and is in form-fitting engagement with the centering device (8).

13. Method for operating a block storage arrangement (1) having at least one block storage element receiving space (2) and a loading space (4) arranged in the direction of gravity below the block storage element receiving space (2), in which a block storage element (3) is moved from the loading space (4) through an opening (5) into the block storage element receiving space (2), **characterized in that** the block storage element (3) is brought into engagement with a centering device (8) arranged in the block storage element receiving space (2) and the centering device (8) is raised with the block storage element (3) in the block storage element receiving space (2) when the block storage element (3) is raised.

14. Method according to claim 13, **characterized in that** at least one centering element (10) of the centering device (8) is locked in a position projecting outwardly beyond a base (9) of the centering device (8) when the block storage element (3) is placed against the centering device (8).

## Revendications

1. Système d'entreposage en blocs (1) avec au moins un espace de logement d'éléments d'entreposage en blocs (2) et un espace de chargement (4) disposé en dessous de l'espace de logement d'éléments d'entreposage en blocs (2), sachant qu'entre l'espace de logement d'éléments d'entreposage en blocs (2) et l'espace de chargement (4) est disposée une ouverture (5) avec un dispositif de maintien (6) et une direction de l'espace de chargement (4) dans l'espace de logement d'éléments d'entreposage en blocs (2) forme une direction d'entreposage, sachant que dans l'espace de logement d'éléments d'entreposage en blocs (2) est disposé un dispositif de centrage (8), qui peut être déplacé dans la direction d'entreposage dans l'espace de logement d'éléments d'entreposage en blocs (2), **caractérisé en ce que** le dispositif de centrage (8) comporte une base (9) avec un contour périphérique adapté à la forme de l'ouverture (5), sachant qu'au moins un élément de centrage (10) dépassant au-dessus du contour périphérique est disposé dans la direction de la gravité au-dessus de la base (9).

2. Système d'entreposage en blocs selon la revendication 1, **caractérisé en ce que** plusieurs surfaces (12) s'étendant en direction d'entreposage sont disposées sur le bord de l'espace de logement d'éléments d'entreposage en blocs (2) et le dispositif de centrage (8) coopère avec les surfaces (12).

3. Système d'entreposage en blocs selon la revendication 2, **caractérisé en ce que** les surfaces (12) sont disposées sur des montants (7), qui s'étendent en direction d'entreposage.

4. Système d'entreposage en blocs selon la revendication 3, **caractérisé en ce qu'**au moins plusieurs montants (7) sont reliés entre eux transversalement à la direction d'entreposage.

5. Système d'entreposage en blocs selon la revendication 3 ou 4, **caractérisé en ce que** les montants (7) sont disposés aux angles de l'ouverture (5).

6. Système d'entreposage en blocs selon la revendication 1, **caractérisé en ce que** l'élément de centrage (10) est relié à un dispositif de précontrainte (11) qui applique une composante de force vers l'extérieur à l'élément de centrage (10) transversalement à la direction d'entreposage.

7. Système d'entreposage en blocs selon la revendication 6, **caractérisé en ce que** l'élément de centrage (10) coopère avec un système de verrouillage (14, 15).

8. Système d'entreposage en blocs selon la revendication 7, **caractérisé en ce que** le système de verrouillage (14, 15) coopère avec un dispositif d'actionnement (16), qui peut être activé par le bas dans la direction de la gravité.

9. Procédé selon la revendication 8, **caractérisé en ce que** le dispositif d'actionnement (16) fait saillie de la base vers le bas en direction de la gravité.

10. Procédé selon l'une quelconque des revendications 1 à 9, **caractérisé en ce que** l'élément de centrage (10) comporte un galet.

11. Procédé selon la revendication 10, **caractérisé en ce que** le galet comporte une surface de roulement, qui est constituée sur un matériau à base d'élastomère.

12. Système d'entreposage en blocs selon l'une quelconque des revendications 1 à 11, **caractérisé en ce qu'**un élément d'entreposage en blocs (3) est disposé en direction de la force de gravité en dessous du dispositif de centrage (8), qui vient en prise par conformité de forme avec le dispositif de centrage (8).

13. Procédé de fonctionnement d'un système d'entreposage en blocs (1) avec au moins un espace de logement d'éléments d'entreposage en blocs (2) et un espace de chargement (4) disposé en direction de la gravité en dessous de l'espace de logement d'éléments d'entreposage en blocs (2), pour lequel on déplace un élément d'entreposage en blocs (3) de l'espace de chargement (4) à travers une ouverture (5) dans l'espace de logement d'éléments d'entreposage en blocs (2), **caractérisé en ce que** l'on met en prise l'élément d'entreposage en blocs (3) avec un dispositif de centrage (8) disposé dans l'espace de logement d'éléments d'entreposage en blocs (2) et l'on soulève le dispositif de centrage (8) en soulevant conjointement l'élément d'entreposage en blocs (3) dans l'espace de logement d'éléments d'entreposage en blocs (2) .

14. Procédé selon la revendication 13, **caractérisé en ce que** l'on verrouille au moins un élément de centrage (10) du dispositif de centrage (8) en déposant l'élément d'entreposage en blocs (3) sur le dispositif de centrage (8) dans une position faisant saillie vers l'extérieur au-dessus d'une base (9) du dispositif de centrage (8).
